# EUROPEAN PATENT APPLICATION

(11) **EP 4 183 571 A1**
(43) Date of publication of application: **24.05.2023**
(21) Application number: 22208795.9
(22) Date of filing: 22.11.2022
(51) Int. Cl.: B32B 7/06, B32B 7/12, B32B 21/06, B32B 21/02, B32B 29/00, B32B 27/36, B32B 27/10

(54) **ANTI-FINGERPRINT PANEL, ITS USE AND PROCESS OF PRODUCTION**

(30) Priority: 23.11.2021 IT 202100029633
(71) Applicant: Ceruti Puricelli, Luigi Mario, 23845 Costa Masnaga (LC) (IT)
(72) Inventor: Ceruti Puricelli, Luigi Mario, 23845 Costa Masnaga (LC) (IT)
(74) Representative: PGA S.p.A.

(57) **Abstract**

The present invention relates to an anti-fingerprint panel constituted by a rigid support comprising, or consisting of, wood and/or derivatives thereof, at least a layer of decorative paper impregnated with a thermosetting resin, at least a coating with an acrylic polymer cured by an electron beam process, and at least a removable polyester-based film. The panel according to the invention shows high resistance to scratching, heat, steam and staining agents. The present invention also relates to a process for producing said panel and its use for making furniture elements.

## Description

### FIELD OF THE INVENTION

The present invention relates to an anti-fingerprint panel constituted by a rigid support comprising, or consisting of, wood and/or derivatives thereof, at least a layer of decorative paper impregnated with thermosetting resin, at least a coating with an acrylic polymer cured by an electron beam process, and at least a removable polyester-based film. The panel according to the invention shows high resistance to scratching, heat, steam and staining agents. The present invention also relates to a process for producing said panel and its use for making furniture elements.

### STATE OF THE ART

It is known the use of wood panels, chipboard, plywood or similar for the constitution of furniture elements such as doors, tables, and furniture in general. The production process of such panels is rather long and costly as several layers of wood fibres must be adhered to form a single panel that will then undergo further processing steps to obtain a wood panel having a decorated surface. This results in a long and expensive process.

Another type of panel used to make furniture elements is the laminate-plated panel. Said panel is constituted by a rough support coated with laminate on both sides. There are different types of laminate on the market, classified according to the processing procedure or the application of decorative sheet.

In particular laminated panels are classified into:
HPL (acronym for the English *High Pressure Laminate)* obtained by pressing sheets with flat presses combined with high temperatures;
CPL (acronym for the English *Continuous Pressure Laminate),* panels subjected to a lower pressure carried out with continuous presses;
CHPL (acronym for the English *Continuous High Pressure Laminate),* new-generation panels subjected to continuous pressure in a calender to obtain a laminate very similar to the high-pressure laminate.

HPL panels, which are mainly used today, are scratch and heat resistant. However, for their production, steps of plating and gluing of laminates on rough panels are required. It is therefore obvious that also the process of realising such panels involves long processing times and high costs, as well as specialised personnel.

Furthermore, the panels for making furniture elements available today, in particular wood panels, have several surface defects. In particular, these defects are caused during the pressing step of the panel production process by air and gas trapped between the sheet metal and the wood panel. In fact, closing the sheet creates a "vacuum" effect between the sheet and the polyethylene terephthalate film (PET). This causes the formation of gases which are not vented laterally and which, being trapped in the panel, create micro-depressions on the surface.

It is therefore necessary to provide a panel for use in furniture making that has no surface defects and at the same time maintains high heat and scratch resistance.

It is also necessary to provide a process for the production of a panel free of surface defects and useful for the realisation of furniture elements, which does not involve long processing times and high costs, resulting in a more economical product for the customer.

### SUMMARY OF THE INVENTION

The Applicant has addressed the problem of providing a panel free of surface defects and micro-depressions in correspondence of the support that constitutes it by inserting in this panel a polyester film, preferably made of polyethylene terephthalate, capable of blocking the surface venting of gases formed in the pressing process.

In particular, the Applicant has surprisingly found that a film having a roughness of the external side of the film characterised by Ra comprised between 1.5 µm and 4 µm and by Rz comprised between 15 µm and 28 µm, both measured at a base length of 2.5 mm according to UNI EN ISO 4288:2000, allows the gases formed during pressing to exit at the sides of the panel. This is due to the fact that the presence of the film blocks the passage of gases to the surface.

Therefore, a first aspect of the present invention relates to an anti-fingerprint panel comprising a rigid support comprising, or consisting of, wood and/or derivatives thereof, at least a layer of decorative paper, at least a coating with an acrylic polymer cured by an electron beam process, and at least a removable polyester-based film, characterized in that said film is constituted by:
- an external side (1A) having a roughness characterized by Ra comprised between 1.5 µm and 4 µm and by Rz comprised between 15 µm and 28 µm, Ra and Rz being measured at a base length of 2.5 mm according to UNI EN ISO 4288:2000;
- a central portion (1B); and
- an internal side (1C) having a roughness characterized by Ra comprised between 1.5 µm and 4 µm and by Rz comprised between 15 µm and 28 µm, Ra and Rz being measured at a base length of 2.5 mm according to UNI EN ISO 4288:2000, wherein said internal side (1C) is in contact with the at least one coating of acrylic polymer.

According to the invention, the rigid support of the anti-fingerprint panel comprises wood and/or a derivative thereof and is covered with decorative paper impregnated with thermosetting resin on one or more sides, preferably on two sides of the rigid support. As a result, the entire panel either comprises wood and/or a derivative thereof or consists of wood or a derivative thereof.

The Applicant has also addressed the problem of developing a process for the production of a panel free of surface defects useful for making furniture elements that does not involve long processing times and high costs.

Therefore, a second aspect of the present invention concerns a process for the production of an anti-fingerprint panel that comprises the steps of:
a) impregnate a decorative paper with a thermosetting resin; obtaining an impregnated decorative paper;
b) coupling a coating of acrylic polymer to a polyethylene terephthalate film having a roughness characterized by Ra comprised between 1.5 µm and 4 µm and by Rz comprised between 15 µm and 28 µm, Ra and Rz being measured at a base length of 2.5 mm according to UNI EN ISO 4288:2000 and being relative to the roughness of the external side and of the internal side of said film;
c) subjecting said acrylic coating to polymerization by electron beam curing;
d) placing on a rigid support comprising, or consisting of, wood and/or a derivative thereof, the impregnated decorative paper according to step a) and the film adhered to the acrylic coating according to step b) and subjecting them to pressing; and preferably
e) removing said film.

The panel produced according to the process above described is economical and has high resistance to scratches, as well as to wet and dry heat, and stains.

It is evident that its use in the production of furniture elements is extremely advantageous.

Therefore, a third aspect of the present invention relates to the use of the panel according to the first aspect of the invention for making furniture elements.

### DETAILED DESCRIPTION OF THE INVENTION

The first aspect of the present invention relates to an anti-fingerprint panel comprising a rigid support comprising, or consisting of, wood and/or derivatives thereof, at least a layer of decorative paper, at least a with an acrylic polymer cured by an electron beam process, and at least a removable polyester-based film, characterized in that said film is constituted by:
- an external side (1A) having a roughness characterized by Ra comprised between 1.5 µm and 4 µm and by Rz comprised between 15 µm and 28 µm, Ra and Rz being measured at a base length of 2.5 mm according to UNI EN ISO 4288:2000;
- a central portion (1B); and
- an internal side (1C) having a roughness characterized by Ra comprised between 1.5 µm and 4 µm and by Rz comprised between 15 µm and 28 µm, Ra and Rz being measured at a base length of 2.5 mm according to UNI EN ISO 4288:2000, wherein said internal side (1C) is in contact with the at least one coating (2) of acrylic polymer. According to the present invention, the film that constitutes the panel according to the invention has a rough surface. In particular, both the internal side of the film in contact with the acrylic coating and the external side of the film have a roughness characterized by Ra comprised between 1.5 µm and 4 µm and by Rz comprised between 15 µm and 28 µm, Ra and Rz being measured at a base length of 2.5 mm according to UNI EN ISO 4288:2000.

In a particularly preferred embodiment, Ra is 2.9 µm ± 0.5 µm and Rz is 21 µm ± 3 µm, measured at a base length of 2.5 mm according to UNI EN ISO 4288:2000. Ra and Rz are international reference standards adopted in mechanical processes to indicate the roughness of an object.

In particular, Ra is the arithmetic mean value of the deviations (taken in absolute value) of the actual surface profile with respect to the mean line. This measure is referred to a length base of the analysed profile to avoid the influence of other types of irregularities.

Rz is the arithmetic mean of the absolute values of the 5 highest peaks and the 5 deepest troughs within a base interval.

The panel according to the invention has an anti-fingerprint surface. Therefore, in the present invention, with the expression "anti-fingerprint panel" is intended a panel comprising an anti-fingerprint surface, i.e. a surface where no fingerprints can be left.

The anti-fingerprint panel according to the present invention is constituted by layers that are adhered together and are configured as a single block. In fact, the anti-fingerprint panel is constituted by pressing a removable polyester film, preferably made of polyethylene terephthalate, to which an acrylic coating, a decorative paper impregnated with thermosetting resin, and a rigid support comprising wood and/or a derivative thereof has been adhered at temperatures and pressures that cause all the layers to adhere to form a single piece.

In particular, the rigid support that constitutes the anti-fingerprint panel according to the invention is a flat element preferably having 4 sides and realised in a material comprising or consisting of wood and/or wood derivatives.

In the present invention, with the expression "wood derivatives" is intended engineered wood, also called mass wood, composite wood, artificial wood or processed wood. Said products derived from wood are produced according to known techniques by binding or fastening wood fibres or boards through adhesives or other fastening methods to form the composite material. Wood derivatives are chipboard, hardboard, plywood, printed wood, MDF wood, OSB wood, recycled wood, and engineered wood.

Preferably, the material which constitutes the rigid support that constitutes the anti-fingerprint panel is preferably selected from chipboard, hardboard, plywood, printed wood, MDF wood (from *Medium Density Fiberboard),* OSB wood (from *Oriented Strand Board),* recycled wood and engineered wood. In particular, in a particularly preferred embodiment, the wood support is in MDF or chipboard.

In the present invention, with "MDF wood" is intended a wood derivative constituted by fibers having mean density comprised between 500 and 800 kg/mc which has some air voids inside.

In the present invention, with "OSB wood" is intended a wood-based material constituted by several layers, which in turn are composed of wood chips assembled with a binder.

In the present invention with "engineered wood" is intended solid wood, composite wood, artificial wood or processed board, manufactured by binding or fastening strands, particles, fibres through adhesives, or other fastening methods, or by veneering wood boards, to form composite material.

In a more preferred embodiment, the material which constitutes the rigid support is chipboard.

With the term "chipboard" (or chipwood) is intended a wood-fibre panel composed by the waste from the processing (wood shavings, or sawdust when very fine) of the wood itself, which is chopped up, mixed with binding materials (glues) and pressed to obtain a panel that can take various sizes.

The chipboard has a variable specific weight depending on the type of wood comprised between 300 kg/m³ and 800 kg/m³.

In another embodiment, the rigid support consists of wood. In other words, in said embodiment, the rigid support is completely realised in wood and does not comprise any wood derivatives.

The rigid support of the panel according to the invention has sizes which can vary according to the use of the panel. Indicatively the wood support that forms the anti-fingerprint panel object of the invention has sizes of 2500 mm x 5600 mm and a thickness from 2 to 100 mm.

In the process of production of the panel according to the invention, said rigid support is placed in contact with at least one layer of decorative paper impregnated with thermosetting resin. In an embodiment, the decorative paper is a decorative paper made from alpha-cellulose. The alpha cellulose paper may comprise one or more pigments and may include a solid colour, a decorative design or a gravure reproduction of natural materials, such as wood, marble, leather, etc.

The decorative paper can be a plain-colored paper or with decorative motifs realized with one color or with different colors, having a grammage comprised between 60 and 250 g/cm².

In an embodiment, the layer of decorative paper impregnated with thermosetting resin is present on only one side of the rigid support.

In another embodiment, the layer of decorative paper impregnated with thermosetting resin is present on two or more sides of the rigid support.

In particular, said thermosetting resin can be selected from melamine-formaldehyde resin, urea resin, urea-melamine resin, preferably melamine-formaldehyde resin.

In the most preferred embodiment, the thermosetting resin of which the decorative paper is impregnated is the melamine-formaldehyde resin.

The melamine-formaldehyde resin is a thermosetting polymer that cross-links by means of heat at high temperatures. Once cured, it will form a cross-link with the decorative paper giving it resistance properties, and in particular, resistance to scratching, wet and dry heat, staining and abrasion.

In the process of production of the panel according to the invention, a plastic film is adhered to an acrylic coating that is polymerized through curing with an electron beam.

In particular, said film is a polyester-based film, more preferably in polyethylene terephthalate (PET).

According to the invention, the film is a protective film that acts as substrate in the curing process with an electron beam.

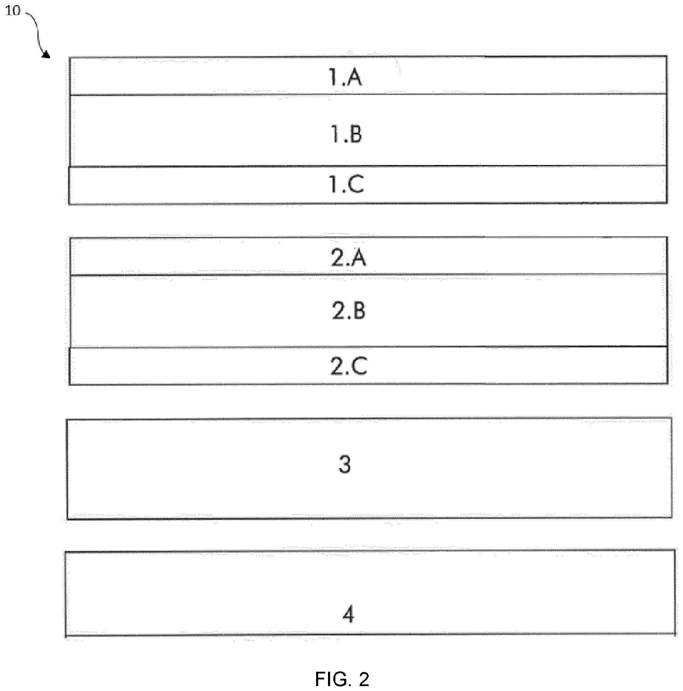

With reference to Figure 2, the removable film 1 has:
- an external side 1A;
- a central portion 1B; and
- an internal side 1C in contact with the acrylic coating, in particular with the external part of said coating (external part 2A in Figure 2).

The central portion 1B is the body of the film.

The internal side 1C is the side in contact with the acrylic coating. In other words, the acrylic coating will be laid on the internal side 1C of the removable film 1.

In particular, the part 1C is the part that confers the aesthetic characteristics of the finished product, i.e. of the panel of the invention, such as low opacity, soft and velvety feel, and the anti-fingerprint effect on the surface of the panel.

The Applicant has advantageously observed that the particular roughness of the external side 1A and the internal side 1C of the film is essential to avoid the formation of gases during the process of production of the panel itself which, not properly vented, would create a surface defect on the panel. In fact, the roughness of the external side 1A of the film as specified above allows to avoid the formation of a "vacuum" effect between the film and the press used during the process of production of the panel.

The "vacuum" effect is deleterious because the heat emitted during the process, and in particular during the pressing step of the layers that compose the final panel, causes the escape of gases from the wood rigid support which, if not properly vented, will create surface defects consisting of micro-depressions in correspondence of the venting point of the support.

Advantageously, the roughness of the film in the range indicated above allows such gases to escape laterally with respect to the rigid support of the panel.

According to the invention, the external side 1A of the removable film has similar or equal roughness compared to the roughness of the internal side 1C of the film.

In a particularly preferred embodiment, the film is transparent so that the decorations on the decorative paper of the panel are visible.

In particular, a transparent film can make colour change in production extremely flexible, allow the reduction of minimum production batches and the reduction of volume and inventory costs considering that any paste-coloured or printed decorative paper with wood, metallic, stone or marble effects can be used. According to the invention, said film is not matted. Furthermore, the film has a thickness comprised between 60 µm and 200 µm, preferably between 100 µm and 180 µm, even more preferably of 180 µm and a grammage comprised between 60 and 200 g/m², preferably of 120 g/m².

It has been observed that the film as described above allows to obtain aesthetic qualities and surface resistance performance: in particular velvety feel, low reflectivity/brilliance, high scratch resistance, high heat resistance, high vapour resistance, high stain resistance (also acid and basic attacks), antibacterial surface (suitable for food contact).

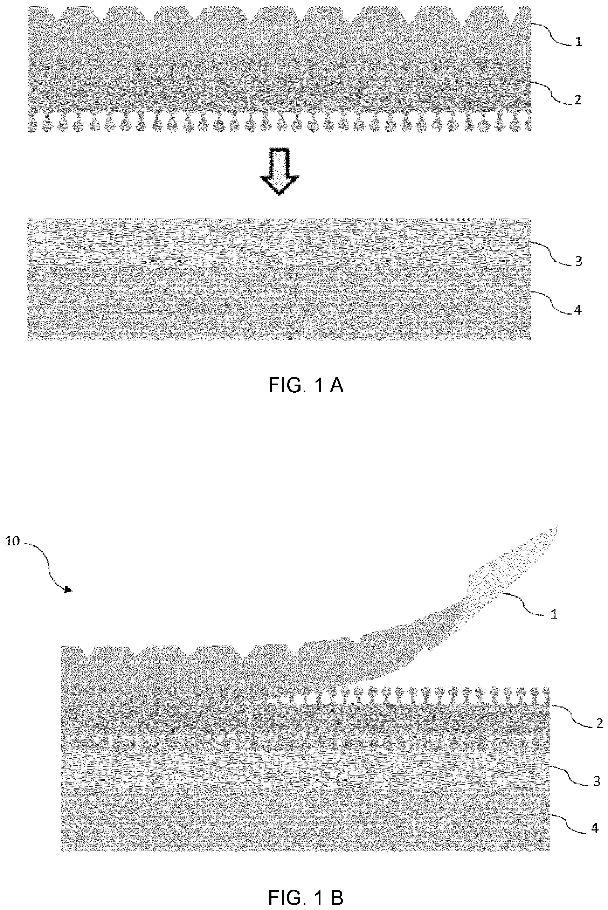

The protective polyester film is a removable film. In fact, at the end of the process of production of the panel, the film can be removed, as shown in Figure 1B. Once this film is removed, the panel will have one or more anti-fingerprint surfaces.

In fact, advantageously, the decorative paper and the acrylic coating adhered to the polyester/PET film can be applied to one or more faces of the panel. In the early stages of the process of production of the panel according to the invention, an acrylic coating is adhered to the removable film described above, in particular a coating comprising from 40 g/m² to 70 g/m² of acrylic polymer, preferably from 50 g/m² to 60 g/m², even more preferably 55 g/m² of acrylic polymer.

The acrylic polymer in the above indicated quantities is laid on the internal side 1C of the film.

In particular, this acrylic coating at the beginning is adhered to the film and, after the pressing step, will be adhered to the impregnated decorative paper above described. As shown in Figure 2, the acrylic coating is formed by:
- an external part 2A which corresponds to the external surface of the panel of the invention; it is mechanically adhered to the film 1C at the beginning of the process.
- a central part 2B which comprises the acrylic polymer cured by electron beam curing (*Electron* Beam *Curing*) and is transparent so as to make visible the decorations on the decorative paper, below said acrylic coating;
- an internal part 2C adhered with the decorative paper. It has a weight ranging from 5 to 20 g/ m², preferably of 10 g/ m². In particular, the internal part 2C acts as an adhesion substrate and is the part that will receive the melamine resin. The melamine formaldehyde resin, polymerizing with it, will create an irreversible bonding.

The acrylic coating has a thickness comprised between 20 µm and 150 µm, preferably between 40 µm and 100 µm, even more preferably of 60 µm and a grammage comprised between 30 and 150 g/m², preferably of 75 g/m².

The external side 1A, the central portion 1B and the internal side 1C of the removable film are shown in Figure 2 together with the external part 2A, central part 2B and to the internal part 2C of the acrylic coating, to the decorative paper 3, and to the support 4.

The external side 1A of the film is the side that, during the process of production of the panel, will be in contact with the sheet of the press. The coating of acrylic polymer confers to the finished product, i.e. to the panel according to the invention, a gloss higher than 1.5 GU, preferably of 1.7 GU measured according to the EN 13722.

In a particularly preferred embodiment, said coating of acrylic polymer (or "acrylic-based") does not contain pigments.

The acrylic polymer of the coating layer cures through an electron beam from a polyester-based film, preferably in polyethylene terephthalate, which is preferably removed at the end of the process. In particular, the electron flow is conferred within EBC (Electron Beam Cured) machines. In such machines, an electron flow is directed onto the protective film and the acrylic polymer layer.

Through this technology, it is possible to obtain the anti-fingerprint panel constituted by a rigid support comprising, or consisting of, wood and/or a derivative thereof, a decorative paper impregnated with thermosetting resin which can be applied on one or more sides of the rigid support, a coating comprising an acrylic polymer placed on top of the decorative paper and a removable polyester-based film, preferably in PET. The anti-fingerprint panel according to the present invention has a surface that is soft to the touch and resistant to scratching, wet and dry heat, steam and stain-removing agents.

In fact, advantageously, the Applicant has observed that the panel according to the invention has:
- at least a level 3 of resistance to scratching according to the EN438-2 paragraph 25; and/or
- at least a level 4 of resistance to steam according to the EN 438-2 paragraph 14; and/or
- at least a level 4 of resistance to dry heat according to the EN 438-2 paragraph 16; and/or
- at least a level 4 of resistance to wet heat according to the EN 438-2 paragraph 18; and/or
- at least a level 4 of resistance to staining agents according to the EN 438-2 paragraph 26.

In a preferred embodiment, the panel according to the invention has:
- at least a level 4 of resistance to scratching according to the EN438-2 paragraph 25; and/or
- at least a level 5 of resistance to steam according to the EN 438-2 paragraph 14; and/or
- at least a level 5 of resistance to dry heat according to the EN 438-2 paragraph 16; and/or
- at least a level 5 of resistance to wet heat according to the EN 438-2 paragraph 18; and/or
- at least a level 5 of resistance to staining agents according to the EN 438-2 paragraph 26.

In addition, it was advantageously observed that the anti-fingerprint panel has an opacity value lower than 3 GU measured at 60° and lower than 15 GU measured at 85° according to the EN 13722, wherein 60° and 85° indicate the degrees of the measurement angle.

With respect to the panels currently available for use in the realisation of furniture elements, the panel according to the invention, formed from the layers described above perfectly adhered to form a single body, has no surface defects. This is due to the specific roughness of the film applied during the process of production of the panel. It is evident that the anti-fingerprint panel object of the present invention, free of structural defects and characterised by high resistance to scratching, heat and staining agents can be advantageously used for the construction of furniture elements.

Thus, an object of the present invention is also the use of an anti-fingerprint panel having the above-described characteristics for making furniture elements. According to this aspect of the invention, the anti-fingerprint panel can be used as a useful piece for making furniture elements. For example, several panels having the described characteristics may be assembled to form a piece of furniture, such as a door, shelf, board or table.

In a preferred embodiment, one or more anti-fingerprint panels according to the first aspect of the invention can be used for making furniture elements of the kitchen. Indeed, after removal of the polyester film the anti-fingerprint panel described herein has an antibacterial surface suitable for contact with food.

A further object of the present invention is a process for the production of an anti-fingerprint panel which comprises the steps of:
a) impregnate a decorative paper with a thermosetting resin; obtaining an impregnated decorative paper;
b) coupling a coating of acrylic polymer to a polyethylene terephthalate film having a roughness characterized by Ra comprised between 1.5 µm and 4 µm and by Rz comprised between 15 µm and 28 µm, Ra and Rz being measured at a base length of 2.5 mm according to UNI EN ISO 4288:2000 and being relative to the roughness of the external side and of the internal side of said film;
c) subjecting said acrylic coating to polymerization by electron beam curing;
d) placing on a rigid support comprising, or consisting of, wood and/or a derivative thereof, the impregnated decorative paper according to step a) and the film adhered to the acrylic coating according to step b) and subjecting them to pressing; and preferably
e) removing said film.

The decorative paper according to step a) of the process is a paper made from alpha-cellulose, on which can be previously printed one or more decorative motifs of interest.

In step a) of the process, the decorative paper is impregnated in an aqueous bath with a thermosetting resin.

In a preferred embodiment, the decorative paper is impregnated in an aqueous bath with melamine resin. In particular, the melamine resins are thermosetting synthetic resins obtained by polycondensation of formaldehyde with melamine. The decorative paper is preferably subjected to a drying step to remove the aqueous residue according to step a') and the dried and impregnated decorative paper will be impregnated with the thermosetting resin for 40 - 70 % of its weight. Said drying step a') is carried out through air ovens. After drying, the decorative paper will be impregnated with thermosetting resin for 40 - 70 % of its weight.

The decorative paper impregnated with thermosetting resin will be pressed in step c) of the process together with the rigid support and the film to which an acrylic coating has been previously adhered.

Before this pressing takes place, an acrylic polymer coating must be coupled to a plastic film, preferably in polyethylene terephthalate, having a roughness in the external side characterised by Ra comprised between 1.5 µm and 4 µm and by Rz comprised between 15 µm and 28 µm, Ra and Rz being measured at a base length of 2.5 mm according to UNI EN ISO 4288:2000 (step b).

During the step c) the acrylic polymer coating undergoes polymerisation through electron beam curing carried out with EBC (from Electron Beam Cured) machines. The treatment process by irradiation with ionising radiation called Electron Beam Curing (EBC) (carried out during step c) of the process) shows production and ecological advantages due to the absence of harmful emissions into the environment and the very high process speed.

In a preferred embodiment, a layer of adhesion promoter (or "primer") is then spread over the acrylic polymer coating, which serves to adhere in step d) the acrylic coating with the paper impregnated with melamine resin.

The particular roughness of the external side of the film adhered to the acrylic coating and then pressed with the decorative paper and the rigid support allows the gases formed during pressing to escape properly. In fact, the gases will escape at the sides of the panel and not at the surface. Precisely because of this specific roughness of the external side of the film, it is possible to obtain a panel having an anti-fingerprint surface resistant to steam, heat, scratching and staining agents.

At this point, the decorative paper impregnated with thermosetting resin, the film adhered to the acrylic coating subjected to polymerisation and the rigid support comprising, or consisting of, wood and/or a derivative thereof are superimposed and subjected to pressing (step d)). The pressing is carried out by single-compartment presses at a temperature between 120-200 °C and at a pressure ranging from 20 to 100 kg/cm².

The Applicant has advantageously observed that by pressing under the above-mentioned conditions, the thermosetting resin on the decorative paper is able to cure with the wood polymers present on the rigid support (cellulose, hemi-cellulose, lignin), when the decorative paper is bonded to the rigid support. Furthermore, during the pressing step (d), the thermosetting resin with which the decorative paper is impregnated, preferably a melamine-formaldehyde resin, before finally polymerising irreversibly returns to the liquid phase due to the temperature and pressure indicated above. The pressure exerted by the single-compartment press is able to make the resin with which the decorative paper is impregnated flow towards the internal part 2C of the acrylic coating. At this point, through the polymerisation of the resin, an irreversible bond is created with the internal part 2C of the acrylic coating. Therefore, the resin on the decorative paper and the acrylic coating will be irreversibly welded into a single body.

Due to the pressure exerted during the process of production of the anti-fingerprint panel described below, the thermosetting resin on the decorative paper polymerizes with the internal part (2C) of the acrylic coating, creating an irreversible bond with it. Therefore, the decorative paper on the rigid support will be adhered to the acrylic coating resulting in a single body.

In the final step e) of the process the film can be removed (as shown in Figure 1B). In a particularly preferred embodiment of the process, said film is removed from the panel.

In the process according to the invention the impregnated decorative paper may be coupled to one or more sides of the rigid support, in particular to one or two faces of the rigid support.

In the anti-fingerprint panel according to the invention, the decorative paper layer is interposed between the rigid support and the at least one coating comprising an acrylic resin.

The process according to the invention by which a decorative effect is applied to a panel is referred to as the "ennobling" process.

This process is carried out by coupling the support to layers of paper impregnated with melamine resin, in particular more preferably two layers of impregnated paper are coupled to the rigid support: one to the upper side and one to the lower side.

The production process can be divided into two typologies: i) with the application of the film and coating layer already cut into sheets, or ii) in reels to be unwound at the press inlet and rewound at the press outlet.

The process can be continuous (example 2) or hot with a static press and continuous finishing coil unwinder (example 3).

The production plant of the anti-fingerprint panel of the invention according to the process defined above is composed by a loading zone where the rigid wood support and/or a derivative thereof is loaded, a coupling where the support and the decorative layers are prepared, a single-compartment press with a short "hot/hot" pressing cycle, the trimming and cooling zone of the ennobled panel, and the testing and quality selection zone.

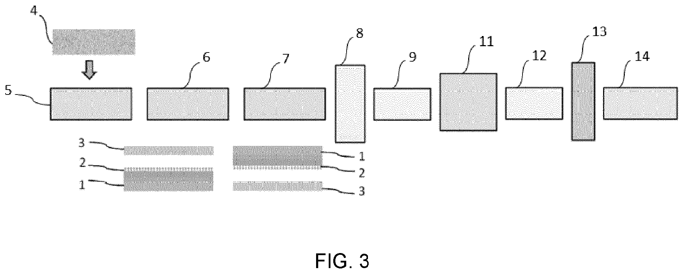

The process begins in the loading zone where the rigid support is loaded, thereafter the lower decorative layers are laid by means of a mechanical arm equipped with vacuum cups (from top to bottom 3-2-1 in Figure 3 bottom left).

The rigid support is deposited at this point on the lower compound, and the entire joint package advances to the next loading zone where the upper compound (from top to bottom 1-2-3 in Figure 3 bottom right) is laid on the panel surface.

The support onto which the top compound and the bottom compound have been applied is then advanced through the ionising bars that generate a magnetic field that causes all the components to adhere perfectly in order to avoid excessive ripples and large air pockets between the laminate components on the rigid support, and to facilitate thus the movement for the entry into the press by means of a carriage with pliers for the introduction into the pressing chamber.

At the end of the process, a panel is obtained wherein all layers (rigid support, impregnated decorative paper and acrylic polymer coating) are adhered and form a single body.

The process according to the invention overcomes the technical problem of first having to impregnate the decorative paper and then to cure the adhesive compound(s) on the decorative paper. Indeed, managing a stock of a multiplicity of resin-impregnated papers from an industrial point of view is onerous and difficult. Therefore, this process is less onerous from an economic point of view and allows the production of larger quantities of panels to be used for the construction of furniture elements in less time. The result is a more efficient process as it allows to carry out the impregnation of the decorative paper and the polymerisation in a single step.

It is evident that the process described above solves the problems of panel production systems using anti-fingerprint PET decorative films that are not directly applied to the decorative paper on the wood support. In fact, the use of a plastic film not directly applied on the rigid support but only placed on said support in a second moment could cause defects on the surface of the panel due to the delamination caused by the different nature of the cellulosic layer of the melamine decorative paper and the plastic layer of the PET film.

### BRIEF DESCRIPTION OF FIGURES

Figure 1 shows the layers present in the panel of the invention. In particular:
Figure 1A shows from bottom to top the rigid support, the decorative paper, the acrylic polymer coating and the removable film; and
in Figure 1B the same layers are shown with the exception of film 1 which is being removed.
Figure 2 shows the sequence of the layers composing the panel according to the invention by showing the three sides of film 1 (external side 1A, the central portion 1B, the internal side (1C)) and the three parts of the acrylic polymer coating 2 (external part 2A, central part 2B and internal part 2C).
Figure 3 shows the process steps for the production of the panel of the invention.
Figure 4 shows a sample of film for which the Ra and Rz parameters were measured according to the methods described in Example 1.
Figure 5 is a schematic representation of the steps of the continuous ennobling process for the production of a chipboard or MDF panel described in the example 2.
Figure 6 is a schematic representation of the steps of the hot ennobling process with a static press for the production of a chipboard or MDF panel according to the invention described in Example 3.

The figures briefly described above are described in detail below.

### DETAILED DESCRIPTION OF FIGURES

Figure 1A shows a rigid support 4 comprising wood and/or a derivative thereof, or consisting of wood or a derivative thereof, to which a decorative paper 3 impregnated with thermosetting resin is coupled. An acrylic coating 2 and a polyester film 1 are joined to the rigid support 4 to which the decorative paper 3 is previously adhered.

The layer of decorative paper 3 is placed between the rigid support 4 and the coating 2, and the film 1 is placed on said coating 2.

Figure 1B shows the anti-fingerprint panel 10 formed by a rigid support 4, to which is coupled the decorative paper 3 impregnated with thermosetting resin, an acrylic-based coating 2 on top of said decorative paper 3, and a polyester film 1. In Figure 1B it is shown the removal of film 1 from panel 10. After the removal of film 1, the anti-fingerprint panel 10 will consist of layers adhered together to form a single body: and in particular by a rigid support 4, a layer of decorative paper 3 impregnated with thermosetting resin and an acrylic-based coating 2.

Figure 2 shows the layers that constitute the anti-fingerprint panel 10. In Figure 2 is shown the rigid support 4, the decorative paper 3, the acrylic-based coating 2 and the film 1. In particular, in Figure 2 are shown the layers of the coating 2:
- an external part 2A;
- a central part 2B; and
- an internal part 2C;
and the sides of the film 1:
- an external side (1A)
- a central portion (1B); and
- an internal side (1C).

Figure 3 shows the steps in the process of production of the anti-fingerprint panel 10.

In particular, the numerical references in Figure 3 represent:
1) film
2) acrylic coating
3) decorative paper
4) rigid support
5) first carriage
6) second carriage
7) third carriage
8) magnetic field
9) carriage with pliers
11) press
12) suction cup exhaust
13) trimmer
14) cooling zone.

On the left side of Figure 3, the rigid support 4 is arranged on the first carriage 5. The arrow shows the arrangement of the rigid support 4 on the first carriage 5. After that, the decorative paper 3 is placed on the second carriage 6.

On the third carriage 7 the decorative paper 3, the acrylic coating 2 and the film 1 are placed on the other side of the rigid support.

Everything moves on to carriage 8 where there are ionising bars to adhere the various layers to the rigid support. In particular, electron beam curing is carried out with the formation of an acrylic polymer coating 2 covered by a film 1, which is then removed. The film 1 and the acrylic-based coating 2 are mechanically adhered at the beginning of the process. The film 1 adhered to the coating 2, the decorative paper 3 and the rigid support 4 are overlapped and positioned in the press 9. At the end of the pressing 2-3-4 will be a single body forming the finished product, i.e. the panel 10 according to the invention (not shown in Figure 3). The film 1 is preferably removed at the end of the process. The panel is trimmed in zone 13 and cooled in zone 14.

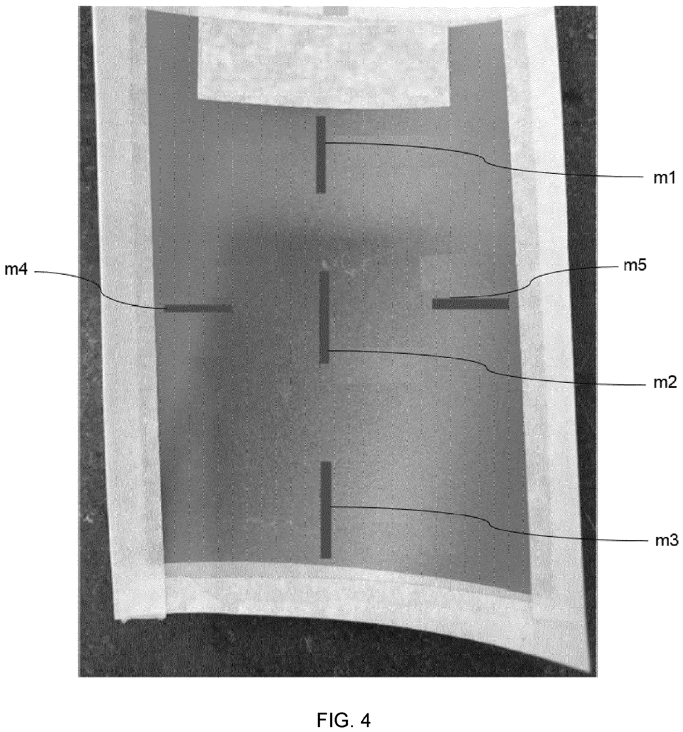

Figure 4 shows the zones of a film sample for which the parameters Ra and Rz were measured in the ways described in Example 1. In particular, "m1", "m2", "m3", "m4" and "m5" indicate the five zones of the PET film on which the roughness measurements were taken.

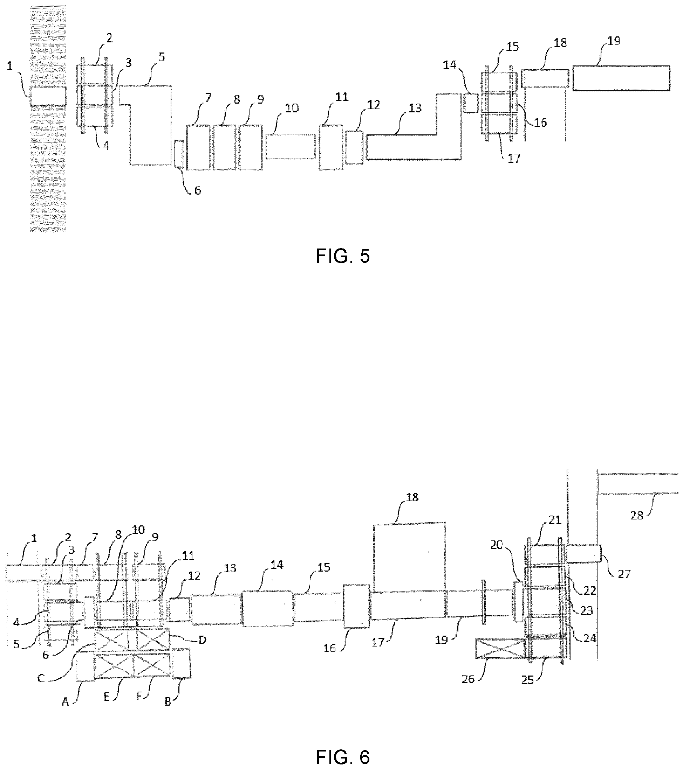

Figure 5 is a schematic representation of the process steps described in Example 2. In particular, the numerical references in Figure 5 represent:
1) Mobile roller conveyor for rough support loading.
2) Suction cup rough support picking station
3) Rough support centring station
4) Suction cup rough support picking station
5) Horizontal squaring line (heads)
6) Brush for top and bottom surface cleaning
7) Quadruple unwinding station to couple support with decorative paper
8) Quadruple unwinding station to couple the PET film with acrylic coating to the support with decorative paper and realise the anti-fingerprint surface
9) Quadruple unwinding station to couple the support with any release layers for textured surfaces
10) Continuous press
11) Quadruple rewinding station to rewind any release layers
12) Surface cooling zone
13) Four-sided trimming and squaring zone
14) Brush for top and bottom surface cleaning
15) Finished product suction cup storage station
16) Finished product centering station
17) Finished product suction cup storage station
18) Mobile roller conveyor for finished product loading
19) Automatic packaging area.

Figure 6 is a schematic representation of the process steps described in example 3. In particular the numerical references in Figure 6 represent:
1) Mobile roller conveyor for rough panel loading
2) Non-conforming panel return station
3) Rough panel picking station
4) Rough panel centering and dimension control station
5) Rough panel picking station
6) Rough panel surface cleaning brush
7) Non-conforming panel return roller conveyor
8) Non-conforming panel storage station
9) Non-conforming panel storage station
10) Panel and decorative paper coupling area on the bottom side
11) Panel and decorative paper coupling area on the top side
   A) PET unwinder with coating of acrylic coating equipped with suction cup system in addition to laser cutting bottom side
   B) PET unwinder with coating of acrylic coating with suction cup system in addition to laser cutting on top side
   C) Decorative loading platforms and any barrier layers equipped with bar with suction cups possible tipping sheets and magnetic fields
   D) Decorative loading platforms and eventual barrier layers with suction cups bar possible tilting of sheets and magnetic fields
   E) PET unrolling platform with anti-fingerprint surface equipped with bar with vacuum for coupling above bottom decorative
   F) PET unwinding platform with anti-fingerprint surface equipped with bar with vacuum for coupling below upper decorative
12) Transit belt with magnetic field
13) Lifting station for introduction into press through pliers of the panel coated with decorative paper
14) Static hot-hot cycle press
15) Depositing and centering station for ennobled panel
16) Four-side trimming with diamond cutters
17) Testing station for the two surfaces
18) Double wheel for panel cooling
19) Centering and pre-cutting area
20) Brush for cleaning ennobled panel surfaces
21) Stacking station for second-grade ennobled panel
22) Stacking station for first grade ennobled panel
23) Centering station for ennobled panel
24) Stacking station first-grade ennobled panel
25) Stacking station for third-grade ennobled panel
26) Station for protection board for finished product packaging
27) Mobile roller conveyor for ennobled panel packs unloading
28) Finished product automatic packaging area

### EXPERIMENTAL SECTION

### Example 1: Production of the anti-fingerprint panel of the invention

The Applicant carried out a dimensional roughness analysis of 4 samples.

The samples on which the analyses were performed are:
1. external side of a PET film (corresponding to external side 1A according to the present patent application);
2. external part of the acrylic coating (corresponding to external part 2A according to the present patent application);
3. internal side of a PET film (corresponding to internal side 1C according to the present patent application);
4. external side of a PET film (corresponding to external side 1A according to the present patent application).

The PET films measured had a thickness of 180 µm.

In particular, measurements of the roughness parameters Ra and Rz were made in 5 zones of each sample by means of the Mitutoyo Rugosimeter, characterised by an instrumental error of 3% for the measurement of the parameter Ra and 5% for the measurement of the parameter Rz.

In particular, the five zones of the PET film on which measurements were taken are indicated in Figure 4 with the numbers the references "m1", "m2", "m3", "m4" and "m5".

The measurements were carried out at a temperature of 21 °C ± 2 °C and a humidity of 50% ± 20%. The measurement procedure followed is UNI EN ISO 4288:2000.

In Table 1 below are shown the Ra and Rz values obtained for each of the samples. In Table 1 are indicated at a base length λc and the number of assessment traits measured for each sample.

**Table 1**

| **Id** | **Description** | **Nomi n. [µm]** | **Toll. + [µm]** | **Toll. - [µm]** | **Measure 1 [µm]** | **X out toll.** | **Measure 2 [µm]** | **X out toll.** | **Measure 3 [µm]** | **X out toll.** | **Measure 4 [µm]** | **X out toll.** | **Measure 5 [µm]** | **X out toll.** |
|---|---|---|---|---|---|---|---|---|---|---|---|---|---|---|
| **SAMPLE 1** | | | | | **Base length λc = 0.25 - Assessment traits N=5** | | | | | | | | | |
| 01 | Ra | 0.00 | - | - | 0.057 | | 0.045 | | 0.047 | | 0.039 | | 0.059 | |
| 02 | Rz | 0.00 | - | - | 0.395 | | 0.290 | | 0.407 | | 0.290 | | 0.390 | |
| | | | | | | | | | | | | | | |

| **SAMPLE 2** | | | | | **Base length λc = 0.8 - Assessment traits N=5** | | | | | | | | | |
|---|---|---|---|---|---|---|---|---|---|---|---|---|---|---|
| 01 | Ra | 0.00 | - | - | 1.241 | | 1.387 | | 1.417 | | 1.374 | | 1.39 | |
| 02 | Rz | 0.00 | - | - | 7.995 | | 9.258 | | 9.319 | | 10.270 | | 7.83 | |
| | | | | | | | | | | | | | | |

| **SAMPLE 3** | | | | | **Base length he =2.5 - Assessment traits N=5** | | | | | | | | | |
|---|---|---|---|---|---|---|---|---|---|---|---|---|---|---|
| 01 | Ra | 0.00 | - | - | 2.928 | | 2.874 | | 2.907 | | 3.423 | | 3.052 | |
| 02 | Rz | 0.00 | - | - | 19.630 | | 22.179 | | 20.769 | | 23.941 | | 20.139 | |
| | | | | | | | | | | | | | | |
| | | | | | | | | | | | | | | |

| **SAMPLE 4** | | | | | **Base length λc = 2.5 - Assessment traits N=5** | | | | | | | | | |
|---|---|---|---|---|---|---|---|---|---|---|---|---|---|---|
| 01 | Ra | 0.00 | - | - | 2.605 | | 3004 | | 3.191 | | 2.686 | | 305 | |
| 02 | Rz | 0.00 | - | - | 19.372 | | 20.710 | | 23017 | | 18.924 | | 22.85 | |

From the measurements performed, PET film samples 3 and 4 were found to be suitable for use in the constitution of an anti-fingerprint panel according to the invention. In fact, the films of samples 3 and 4 have Ra and Rz values suitable for use in the process of production of the panel described above because, these specific roughness values allow for the lateral venting of the gases formed during the pressing phase of the sheet and the polyethylene terephthalate (PET) film.

The film sample 1 does not have suitable roughness values and was therefore not subsequently used for the production of the anti-fingerprint panel.

### Example 2: Continuous ennobling process for the production of a panel in chipboard according to the invention

The present process is described with reference to Figure 5. The numerical references presented below are related to the elements represented in Figure 5.

A rough chipboard support has been loaded on the mobile station (1) with a forklift and from the mobile station (1) it has been automatically placed on the stations (2) and (4) which are rough support picking stations.

After that, with a vacuum cluster, the rough support has been automatically loaded on the station (3) and introduced into the horizontal squaring (5) to rectify the two heads.

After cleaning the two surfaces of the rough support with the brush (6), the support entered the coupling zone (7, 8 and 9). In particular, in station (7), the support has been coupled with decorative paper impregnated with thermosetting resin and any barrier layers, in station (8) the PET film is coupled with acrylic coating, and in station (9) the support may be coupled with one or more release layers.

The whole was made to pass through the continuous hot press (10). For the present process, a Hymmen continuous press with pressure from 15 to 40 Kg/cm² has been used.

The release layers are rewound in the quadruple rewind station (11), the rigid support surfaces were cooled in the zone (12) and the support underwent then trimming and squaring in the area (13), and a cleaning through brush in the area (14).

At the end of these operations, the finished product was aligned perfectly in the centering area (16) and then stacked through suction cup bridge in the stations (15) and (17). Finally, the finished product was sent through mobile roller conveyor (18) to the automatic packaging (19).

The Applicant noted that this process is particularly suitable for the production of chipboard or MDF panels with anti-fingerprint surface.

### Example 3: Hot/hot ennobling process with static press for the production of a MDF panel according to the invention

The present process is realized using a static press and a continuous finishing coil unwinder.

The numerical references presented below relate to the elements represented in Figure 6.

The rough MDF support was loaded on the mobile station (1) with a forklift and from the station (1) was moved to the station (6) where the two surfaces of the support were brushed and vacuumed. At this point, the lower and upper decorative papers, both impregnated with thermosetting resin, are composed with any barrier layers and coupled to the two surfaces of the support in the workstations (10) and (11). In addition, always on these stations through the cutting and the bar with suction cups that are located in the area (A, B, C, D, E and F) the PET films were also coupled with acrylic coating.

The whole was made to pass through the transit belt (12) where with a magnetic field the various layers on the panel were compacted by letting out all the residual air.

In the station (13) the panel was lifted, taken with the pliers placed on the press introduction carriage and brought into the press (14), where with a time of 0.8 seconds the press closed reaching the maximum pressure 70 kg/ cm². After opening the press, a system of suction cups placed on the carriage brought the panel to the centering zone (15), where the PET film was removed. At this point, the panel entered the zone (16), where it was subjected to trimming of the four sides through diamond cutters.

In station (17) the panel was subjected to visual testing and in zone (18) the panel was overturned twice to be cooled.

In the zone (19), the panel has been pre-cut. This station is optional and the pre-cutting of the panel can be done if required.

The panel was subjected to cleaning of the surfaces through the brush in the station (20) and then passed into the centering and collecting area (23) to realize the packages (stations 21, 22, 24 and 25). At this point, through the mobile roller conveyor (27), the finished product (panel according to the invention) is brought into the automatic packaging zone (28) of the finished product.

The Applicant has observed that this process is particularly suitable for the production of chipboard or MDF panels with anti-fingerprint surface.

## Claims

1. An anti-fingerprint panel (10) comprising a rigid support (4) comprising, or consisting of, wood and/or derivatives thereof, at least a layer of decorative paper (3) impregnated with a thermosetting resin, at least a coating (2) with an acrylic polymer cured by an electron beam process, and at least a removable polyester-based film (1), **characterized in that** said film (1) is constituted by:
- an external side (1A) having a roughness **characterized by** Ra comprised between 1.5 µm and 4 µm and by Rz comprised between 15 µm and 28 µm, Ra and Rz being measured at a base length of 2.5 mm according to UNI EN ISO 4288:2000;
- a central portion (1B); and
- an internal side (1C) having a roughness **characterized by** Ra comprised between 1.5 µm and 4 µm and by Rz comprised between 15 µm and 28 µm, Ra and Rz being measured at a base length of 2.5 mm according to UNI EN ISO 4288:2000, wherein said internal side (1C) is in contact with the at least one coating (2) of acrylic polymer.

2. The anti-fingerprint panel (10) according to claim 1, wherein said wood derivatives are selected from chipboard, hardboard, plywood, printed wood, MDF wood, OSB wood, recycled wood and engineered wood.

3. The anti-fingerprint panel (10) according to claim 2, wherein said wood derivative is selected from chipboard and MDF wood.

4. The anti-fingerprint panel (10) according to any one of the preceding claims, wherein the external side (1A) and the internal side (1C) of the film (1) have roughness **characterized by** Ra of 2.9 µm ± 0.5 µm and Rz of 21 µm ± 3 µm, Ra and Rz being measured at a base length of 2.5 mm according to UNI EN ISO 4288:2000.

5. The anti-fingerprint panel (10) according to any one of the preceding claims, wherein said decorative paper (3) is a colored paper comprising one or more decorative motifs and is placed on one or more faces of the rigid support (4), preferably on two faces of said rigid support (4).

6. The anti-fingerprint panel (10) according to any one of the preceding claims, wherein said thermosetting resin of said decorative paper (3) is selected from melamine-formaldehyde resin, urea resin, urea-melamine resin.

7. The anti-fingerprint panel (10) according to claim 6, wherein said thermosetting resin of said decorative paper (3) is melamine-formaldehyde resin.

8. The anti-fingerprint panel (10) according to any one of the preceding claims, wherein said film (1) is a transparent polyethylene terephthalate film.

9. The anti-fingerprint panel (10) according to any one of the preceding claims, wherein said film (1) has a thickness comprised between 60 µm and 200 µm, preferably between 100 µm and 180 µm, even more preferably of 180 µm.

10. The anti-fingerprint panel (10) according to any one of the preceding claims, wherein said film (1) has a grammage comprised between 60 and between 200 g/m², preferably of 120 g/m².

11. A process for the production of an anti-fingerprint panel according to any one of claims 1 to 10 which comprises the steps of:
a) impregnate a decorative paper with a thermosetting resin; obtaining an impregnated decorative paper;
b) coupling a coating of acrylic polymer to a polyethylene terephthalate film having a roughness **characterized by** Ra comprised between 1.5 µm and 4 µm and by Rz comprised between 15 µm and 28 µm, Ra and Rz being measured at a base length of 2.5 mm according to UNI EN ISO 4288:2000 and being relative to the roughness of the external side and of the internal side of said film;
c) subjecting said acrylic coating to polymerization by electron beam curing;
d) placing on a rigid support comprising, or consisting of, wood and/or a derivative thereof, the impregnated decorative paper according to step a) and the film adhered to the acrylic coating according to step b) and subjecting them to pressing; and preferably
e) removing said film.

12. The process according to claim 11, wherein the impregnated decorative paper is coupled to one or more sides of the rigid support.

13. The process according to claim 11 or 12, wherein said thermosetting resin according to step a) is melamine-formaldehyde resin.

14. The process according to any one of claims 11 to 13, wherein in step b)polyethylene terephthalate film is coupled with a coating comprising from 40 g/m² to 70 g/m² of acrylic polymer, preferably from 50 g/m² to 60 g/m², even more preferably 55 g/m² of acrylic polymer.

15. Use of the anti-fingerprint panel (10) according to any one of claims 1 to 10, for making furniture elements.
